# EUROPEAN PATENT APPLICATION

(11) **EP 3 282 394 A1**
(43) Date of publication of application: **14.02.2018**
(21) Application number: 16183677.0
(22) Date of filing: 11.08.2016
(51) Int. Cl.: G06K 9/62, G06K 9/00

(54) **A VISION SYSTEM AND METHOD FOR A MOTOR VEHICLE**

(71) Applicant: Autoliv Development AB, 447 83 Vårgårda (SE)
(72) Inventor: Bjärkefur, Jon, 58249 Linköping (SE); Forslund, David, 58214 Linköping (SE)
(74) Representative: Müller Verweyen

(57) **Abstract**

A vision system (10) for a motor vehicle comprises an imaging apparatus (11) adapted to capture images from a surrounding of the motor vehicle, and a processing device (14) adapted to detect objects in the surrounding of the motor vehicle by processing images captured by said imaging apparatus (11). The processing device (14) comprises a first classifier (21) adapted to classify detected objects into one of a plurality of object categories, and a tracker (22) adapted to track detected objects over several time frames in the captured images. The vision system (10) comprises a second classifier (23) having a higher functional safety level than said first classifier (21), said second classifier (23) being adapted to reclassify objects classified by said first classifier (21), and to mark an object as verified or not verified based on the classification result from the second classifier (21).

## Description

The invention relates to a vision system for a motor vehicle, comprising an imaging apparatus adapted to capture images from a surrounding of the motor vehicle, and a processing device adapted to detect objects in the surrounding of the motor vehicle by processing images captured by said imaging apparatus, comprising a first classifier adapted to classify detected objects into one of a plurality of object categories, and a tracker adapted to track detected objects over several time frames in the captured images. The invention relates also to a corresponding vision method.

Such vision systems are generally known, see for example EP 2 219 133 A1.

In a stereo vision camera system, objects such as other vehicles and pedestrians can be detected in many different ways, including for example classification in mono images, disparity image or optical flow object segmentation, feature point tracking, etc. Such advanced concepts typically result in a large amount of software code. In order to be able to use the detected objects in safety critical high level applications such as automatic emergency braking or steering assistance, the object detection must be raised to a higher functional safety level, such as Automotive Safety Integrity Level B (ASIL-B). However, having to write the complete object detection section in a higher functional safety level requires a lot of manpower and therefore is very expensive.

The object of the invention is to provide a cost-effective vision system and method where objects detected by the object detection section can be used in safety critical high level applications such as automatic emergency braking or steering assistance.

The invention solves this object with the features of the independent claims.

The idea of the invention is to avoid having to write the complete object detection section with higher functional safety level quality. Instead a second classifier, which may have a significantly smaller size than the first classifier, and having a higher safety level quality, is provided in addition to the first classifier which can have a non-critical safety level, like Quality Management (QM) level. In this manner, the amount of code that must have a higher functional safety level quality can be significantly, for example at least by a factor of two or three, smaller than if the complete first classifier would have to have a higher functional safety level. This contributes to an enormous reduction in manpower and costs. A detected object is then marked as verified or not verified based on the classification result from the second classifier.

The marking of an object as verified or not verified may preferably be based on a comparison of the classification results from the first classifier and the second classifier. In some preferred embodiments, the second classifier marks an object as verified in case the object category determined by said second classifier is the same as the object category determined by said first classifier. In other preferred embodiments, the second classifier marks an object as verified in case the object category determined by said second classifier belongs to a group of one or more predetermined object categories, like other vehicles, pedestrians, bicyclists, large animals.

It is very beneficial that the second classifier code can advantageously be significantly smaller than the first classifier code, and for example comprise less than half, like one third, of the first classifiers components, only. Also, the second classifier code can advantageously re-use the same, or essentially the same, classification parameters and/or classifier tuning as the first classifier code. Through the above features, the effort for producing and maintaining the second classifier code can be strongly reduced, while the second classifier is nevertheless capable of fulfilling its safety function without any restriction.

In the following the invention shall be illustrated on the basis of preferred embodiments with reference to the accompanying drawings, wherein:

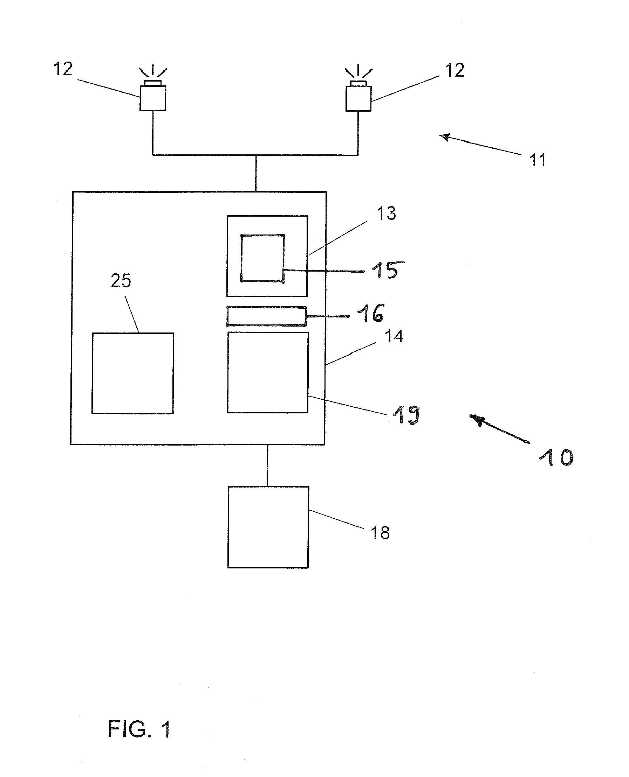

- Fig. 1: shows a schematic drawing of a vision system according to the invention;
- Fig. 2: shows a schematic flow diagram for illustrating operations within the vision system; and
- Fig. 3: shows a captured image for illustrating operation of the second classifier.

The vision system 10 is mounted in a motor vehicle and comprises an imaging apparatus 11 for capturing images of a region surrounding the motor vehicle, for example a region in front of the motor vehicle. Preferably the imaging apparatus 11 comprises one or more optical imaging devices 12, in particular cameras, preferably operating in the visible and/or infrared wavelength range, where infrared covers near IR with wavelengths below 5 microns and/or far IR with wavelengths beyond 5 microns. In some embodiments the imaging apparatus 11 comprises a plurality of imaging devices 12 in particular forming a stereo imaging apparatus 11. In other embodiments only one imaging device 12 forming a mono imaging apparatus 11 can be used.

The imaging apparatus 11 is coupled to a data processing device 14 adapted to process the image data received from the imaging apparatus 11. The data processing device 14 may comprise a dedicated hardware circuit 13 adapted to control the capture of images by the imaging apparatus 11, receive the electrical signal containing the image information from the imaging apparatus 11, rectify or warp pairs of left/right images into alignment and/or create disparity or depth images, which per se is known in the art. The dedicated hardware circuit 13 may for example be a Field Programmable Gate Array (FPGA) or an Application Specific Integrated Circuit (ASIC), or a corresponding section of a System-On-Chip (SoC) device comprising, for example, FPGA, ASIC, DSP, ARM and/or microprocessor functionality. However, it is possible in some embodiments that the dedicated hardware circuit 13 is a microprocessor, or a microprocessor section of an SoC device. In the case of a vision system 10 using only one camera 12 a dedicated hardware circuit 13 may not be needed. In that case, the object detection section 15 is contained in the data processing device 14.

Further image and data processing carried out in the processing device 14 by an object detection section 15 comprises identifying and classifying, by means of a first classifier 21 to be described below, possible objects in front of the motor vehicle, such as pedestrians, other vehicles, bicyclists and/or large animals, tracking over several time frames, by means of a tracker 22, the position of object candidates identified in the captured images, and activating or controlling at least one driver assistance device 18 depending on an estimation performed with respect to a tracked object, for example an estimated collision probability. The object detection section may be arranged in the dedicated hardware circuit 13 of the processing device 14.

The driver assistance device 18 may in particular comprise a display device to display information relating to a detected object. However, the invention is not limited to a display device. The driver assistance device 18 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The data processing device 14 is preferably a digital device which is programmed or programmable and preferably comprises a microprocessor, micro-controller, digital signal processor (DSP) or a System-On-Chip (SoC) device, and preferably has access to, or comprises, a memory device 25. The data processing device 14, dedicated hardware circuits 13, 19 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image pre-processing, image processing to possible activation or control of driver assistance device 18 are performed automatically and continuously during driving in real time.

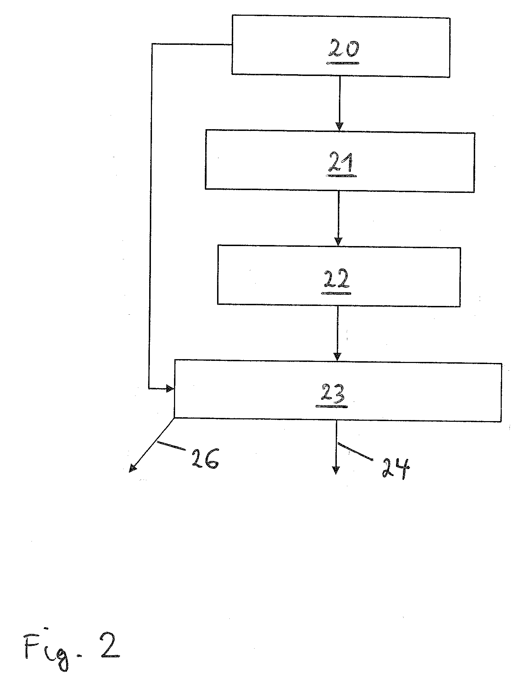

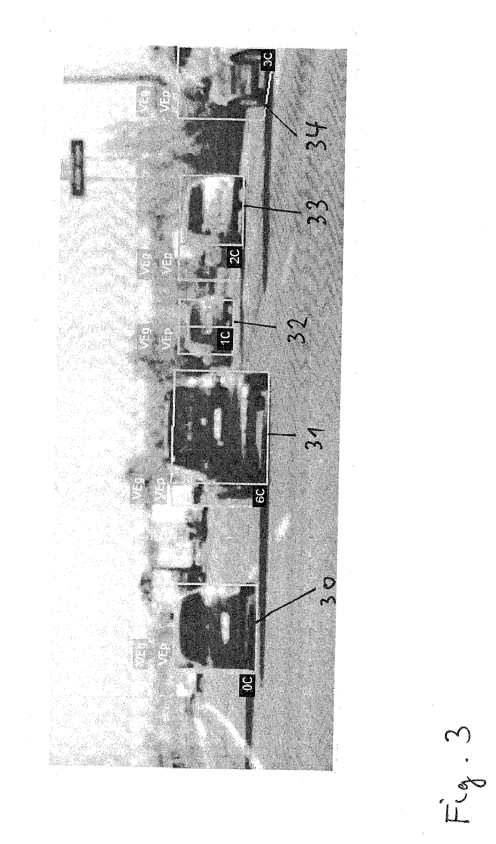

The invention is explained in the following on the basis of Figures 2 and 3. As described above, the images 20 from the imaging apparatus 11 are processed in the processing device 14. In particular, objects in front of the ego vehicle are detected by means of an object detector in the object detection section 15, classified by a first classifier 21 into one of a plurality of object categories, and tracked over time, or several time frames, in a tracker 22. The first classifier 21 code and the tracker 22 code have QM quality corresponding to a non-critical functional safety level. The first classifier 21 is preferably executed in the object detection section 15 of the processing device 14, and typically in the dedicated hardware circuit 13 thereof. The tracker 22 is typically executed in a QM microprocessor or digital signal processor 16 of the electronic processing device 14.

Without the invention, the detected, classified and tracked objects output by the tracker 22 would be used for evaluating and deciding the activation of the driver assistance device 18.

As mentioned earlier, for safety critical applications it may not be sufficient to rely on detected objects having QM safety level, only. Therefore, according to the invention, a second classifier code module 23 is executed on an electronic processing device 19. The second classifier 23 code has a higher functional safety level, for example ASIL-B level, than the first classifier 21 code. The second classifier 23 is preferably placed after, i.e. downstream, the first classifier 21, as shown in Figure 2.

Preferably, the second classifier 23 code is composed of a subset of code from the first classifier, re-written in higher functional safety level quality, only. That is, exactly the same classification as performed in the first classifier 21 can preferably be re-used in the second classifier 23, but only a few components of it are needed. This is because the goal of the functional safety module 23 is to find bugs in the QM code, and electronic errors in the processing hardware, only, both of which are easy to detect as they manifest in very large errors for the detected objects. In the above manner, the effort for producing and maintaining the second classifier 23 code can be strongly reduced. The second classifier 23 code can be significantly smaller than the first classifier 21 code, for example less than half, like one third of the first classifier 21 code.

The second classifier 23 can operate in the following manner. Generally, the second classifier 23 only needs to be able to discriminate between a patch containing a particular object, like another vehicle, and a patch containing arbitrary content. It does not need to handle challenging false positives accurately, as this ability is no demand in functional safety. Therefore, the ability of the second classifier to identify false positive detections can be, and usually is, lower than the ability of the first classifier to identify false positive detections, which however is not harmful in the context of the present invention.

Preferably, the classification result of the second classifier 23 is compared to the classification result of the first classifier 21, and the marking of a detected object as verified or not verified is based on this comparison. In some embodiments, the second classifier 23 marks an object as verified in case the object category determined by the second classifier 23 is the same as the object category determined by the first classifier 21. In other embodiments, the second classifier 23 marks an object as verified in case the object category determined by the second classifier 23 belongs to a group of one or more predetermined object categories. Other ways of marking of a detected object as verified or not verified based on the result of the second classifier 23 are possible.

Generally, the second classifier 23 lets pass (arrow 24) only those detected objects which fulfil a higher functional safety level as provided by the first classifier 21. In other words, the second classifier 23 checks objects classified by the first classifier, rejecting or discarding (arrow 26) those which do not fulfil the higher functional safety standards of the second classifier 23. This implies that the number of verified detected objects verified by the second classifier 23 is equal or less than the number of unverified detected objects output by the first classifier 21.

Preferably, the second classifier 23 is executed on a dedicated hardware device 19, i.e. a separate electronic processing device 19 different from the dedicated hardware circuit 13 executing the first classifier 21. The dedicated functional safety processing device 19 may be of a type mentioned above with respect to the dedicated hardware circuit 13. More preferably, however, the dedicated functional safety processing device 19 is a microprocessor, or a microprocessor section of an SoC device, given that code having a higher functional safety level like ASIL-B is difficult to implement on an FPGA or an ASIC device. Preferably, a smaller dedicated functional safety processing device 19 as compared to the dedicated hardware circuit 13, i.e. one with less processing capacities, may be well sufficient for executing the second classifier 23 code.

The operation of the second classifier 23 is illustrated on the basis of Figure 3, showing an image captured by the imaging apparatus 11. Herein, five detected cars 30 to 34 in front of the ego vehicle have been determined by the second classifier 23 to be safe at the higher functional safety level, like ASIL-B. The second classifier 23 lets every safe object 30 to 34 pass in the processing such that safety-critical decisions like active braking or steering assistance may be based on it.

## Claims

1. A vision system (10) for a motor vehicle, comprising an imaging apparatus (11) adapted to capture images from a surrounding of the motor vehicle, and a processing device (14) adapted to detect objects in the surrounding of the motor vehicle by processing images captured by said imaging apparatus (11), comprising a first classifier (21) adapted to classify detected objects into one of a plurality of object categories, and a tracker (22) adapted to track detected objects over several time frames in the captured images, **characterized in that** said vision system (10) comprises a second classifier (23) having a higher functional safety level than said first classifier (21), said second classifier (23) being adapted to re-classify objects classified by said first classifier (21), and to mark an object as verified or not verified based on the classification result from the second classifier (23).

2. The vision system as claimed in claim 1, **characterized in that** the marking of an object as verified or not verified is based on a comparison of the classification results from the first classifier (21) and the second classifier (23).

3. The vision system as claimed in any one of the preceding claims, **characterized in that** said second classifier (23) marks an object as verified in case the object category determined by said second classifier (23) is the same as the object category determined by said first classifier (21).

4. The vision system as claimed in any one of the preceding claims, **characterized in that** said second classifier (23) marks an object as verified in case the object category determined by said second classifier (23) belongs to a group of one or more predetermined object categories.

5. The vision system as claimed in any one of the preceding claims, **characterized in that** said second classifier (23) discards non-verified objects (26), letting pass verified objects (24), only.

6. The vision system as claimed in any one of the preceding claims, **characterized in that** the second classifier (23) is executed on a dedicated processing device (19).

7. The vision system as claimed in any one of the preceding claims, **characterized in that** the second classifier (23) code is significantly smaller than the first classifier (21) code, for example less than half of the first classifier (21) code.

8. The vision system as claimed in any one of the preceding claims, **characterized in that** the second classifier (23) code re-uses the same, or essentially the same, classification parameters and/or classifier tuning as the first classifier (21) code.

9. A vision method for a motor vehicle, comprising capturing images from a surrounding of the motor vehicle, and detecting objects in the surrounding of the motor vehicle by processing captured images, comprising classifying detected objects into one of a plurality of object categories by a first classifier (21), and tracking detected objects over several time frames in the captured images, **characterized by** re-classifying, in a second classifier (23), objects classified by said first classifier (21), said second classifier (23) having a higher functional safety level than said first classifier (21), and marking an object as verified or not verified based on the classification result from the second classifier (23).
